# EUROPEAN PATENT SPECIFICATION

(11) **EP 2 947 724 B1**
(45) Date of publication and mention of the grant of the patent: **26.07.2017**
(21) Application number: 14177870.4
(22) Date of filing: 21.07.2014
(51) Int. Cl.: H01R 13/627, H01R 43/18, H01R 24/64

(54) **Modular plug and manufacturing method thereof**
Modularstecker und Herstellungsverfahren dafür
Broche modulaire et son procédé de fabrication

(30) Priority: 21.05.2014 WO PCT/CN2014/077947
(43) Date of publication of application: 25.11.2015
(73) Proprietor: Meilu Electronics (Shenzhen) Co., Ltd., Shenzhen, Guangdong 518107 (CN)
(72) Inventor: Yen, Ping, Shenzhen, Guangdong 518107 (CN)
(74) Representative: Sun, Yiming

(56) References cited:
- EP-A1- 1 653 575
- CH-B1- 697 606
- FR-A1- 2 776 845
- JP-A- 2014 157 680
- US-A- 5 462 457
- US-A- 5 879 610
- US-A- 5 993 237
- US-A1- 2008 108 243
- US-A1- 2012 015 541

## Description

### FIELD OF THE TECHNOLOGY

The present application is directed to a modular plug, particularly, to a modular plug possessing an unbreakable clamping elastic sheet that can be repetitiously pressed and bent, and its manufacturing method.

### BACKGROUND

Modular plug is a very universal network connection accessory, which is used in realizing the connection between the cable and the cable interface of the network apparatus. Modular plug under the existing technology (such as RJ45 connector) mainly is provided with a terminal containing a metal contact and a clamping elastic sheet located at the upper side of the front end of the terminal and extending behind. The connecting portion of the clamping elastic sheet connecting to the upper side of the front end of the terminal is a clamping projection protruding on both sides. After the front end of the modular plug is inserted into a cable interface, the sloped clamping projection on the clamping elastic sheet is squeezed within the cable interface under the elastic effect, so that the modular plug is stabilized. When the cable needs to be plucked out, the clamping elastic sheet can be pressed and the modular plug is released. Modular plugs under existing technology all are formed in a one-time process using hard plastic material. Such will cause the clamping elastic sheet to be very easily broken in the process of repeatedly plugging in and out of the cable. Once the clamping elastic sheet breaks, the modular plug cannot tightly fasten inside the cable interface and be stabilized, rendering unreliable connection of the network.

### SUMMARY OF THE INVENTION

In order to solve the above problem, the purpose of the present application lies in providing a modular plug possessing an unbreakable clamping elastic sheet that can be repetitiously pressed and bent.

The present application is realized through the technical measures according to independent claims 1 and 5. A modular plug includes a terminal containing a metal contact, an upper surface of a front end of the terminal is provided with a recess, an upper side of the terminal is connected with a clamping elastic sheet through injection moulding, a front end of the clamping elastic sheet is provided with a projection that matches the recess in shape and size, the projection is tightly inlaid within the recess, a top end of the clamping elastic sheet extends downwardly and overlays on a front surface of the terminal, a material of the clamping elastic sheet is nylon or polyoxymethylene (POM) and a material of the terminal is polycarbonate resin, and the recess has an oval gear shape and wherein teeth of the recess that proximate to two ends of a central part of the recess form an expanded dovetailed shape. As a preferred embodiment, the clamping elastic sheet includes a connecting head fixed at the front end of the terminal and an elastic sheet extended in slanted upward direction from an end of the connecting head, the elastic sheet is provided with a clamping projection protruding from both sides and proximate to the end of the connecting head.

As a preferred embodiment, the connecting head and the elastic sheet are formed from one single injection moulding.

As a preferred embodiment, the modular plug is a RJ45, RJ50, RJ61, RJ48, RJ25, RJ14, RJ12 or RJ11 connector.

The present application also disclosed a method of manufacturing the above modular plug, including the following steps:
(1) firstly, injection molding the terminal of the material of polycarbonate resin, and then injection molding the terminal of the material of polycarbonate resin having a irregularly shaped recess using a mould cavity of a first rear mould and a convex mould of a first front mould; and
(2) secondly, under the condition of ensuring a temperature of an injection molding machine, opening and spirally loosening the first rear mould, covering a second front mould by the first rear mould. Injection moulding a clamping elastic sheet using a mould cavity of the second front mould, opening and spirally loosening the first rear mould, and taking out an end product, the recess having an oval gear shape and teeth of the recess that proximate to two ends of a central part of the recess forming an expanded dovetailed shape.

As a preferred embodiment, the first rear mould is provided on a lower mould board, on the lower mould board is also paralleledly provided with a second rear mould, the first rear mould and the second rear mould are the same in shape, size and mould cavity, the first front mould is provided on an upper mould board, on the upper mould board is also paralleledly provided with the second front mould, the upper mould board is provided as paralleledly fixed, the lower mould board is provided in parallel and is rotatable in motion at 180 degrees.

The present application is formed from the processing of different materials with twice injection moulding under high temperature. The material of the clamping elastic sheet is nylon or POM, allowing the clamping elastic sheet to be able to be repetitiously pressed and bent yet not be easily broken, so as to ensure the reliability of the network connection. It inventively provided a recess at the upper surface of the front end of the terminal, and at the front end of the clamping elastic sheet is provided with a projection. The projection is tightly inlaid within the recess. The cooperation of the shapes of the bezel portion which overlays the terminal and extends downwardly from the top end of the clamping elastic sheet and the recess allows the clamping elastic sheet to fix stably on the terminal.

### BRIEF DESCRIPTION OF THE DRAWINGS

Figure 1 is a structural illustrative view of an embodiment of the present application;
Figure 2 is a structural illustrative view of a terminal of an embodiment of the present application;
Figure 3 is a structural illustrative view of shrapnel clamping elastic sheet of an embodiment of the present application;
Figure 4 is an illustrative view of the working process of a mould of an embodiment of the present application.

### DETAILED DESCRIPTION

Below is a further detailed description of the present application combining embodiments with reference to the drawings.

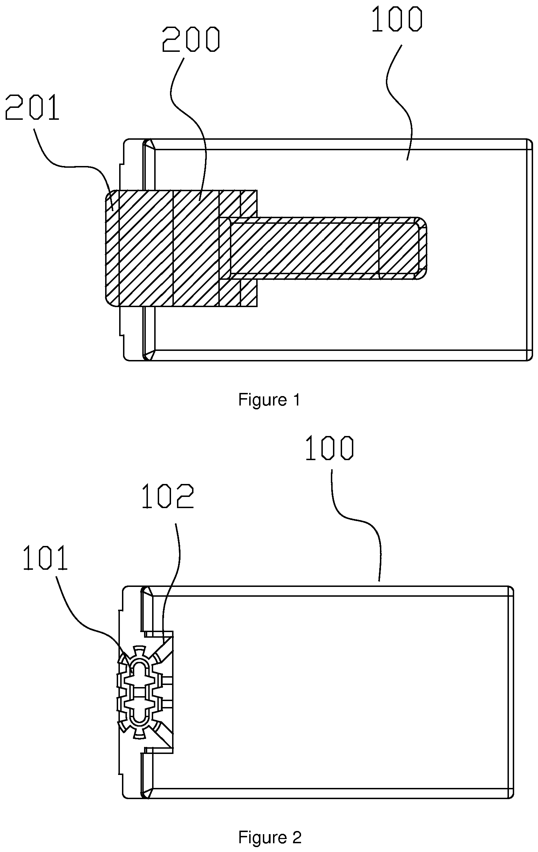

The modular plug of the present embodiment, referring to Figures 1-3, includes a terminal 100 containing a metal contact. The upper surface of the front end of the terminal 100 is provided with a recess 101. The upper side of the terminal 100 is connected with a clamping elastic sheet 200 through injection moulding. The front end of the clamping elastic sheet 200 is provided with a projection 202 that corresponds to the shape and size of the recess 101. The projection 202 is tightly inlaid within the recess 101. The top end of the clamping elastic sheet 200 extends downwardly and thus forms a bezel portion 201 that overlays the front side of the terminal 100. The material of the clamping elastic sheet 200 is nylon or POM. The material of the terminal 100 is polycarbonate resin.

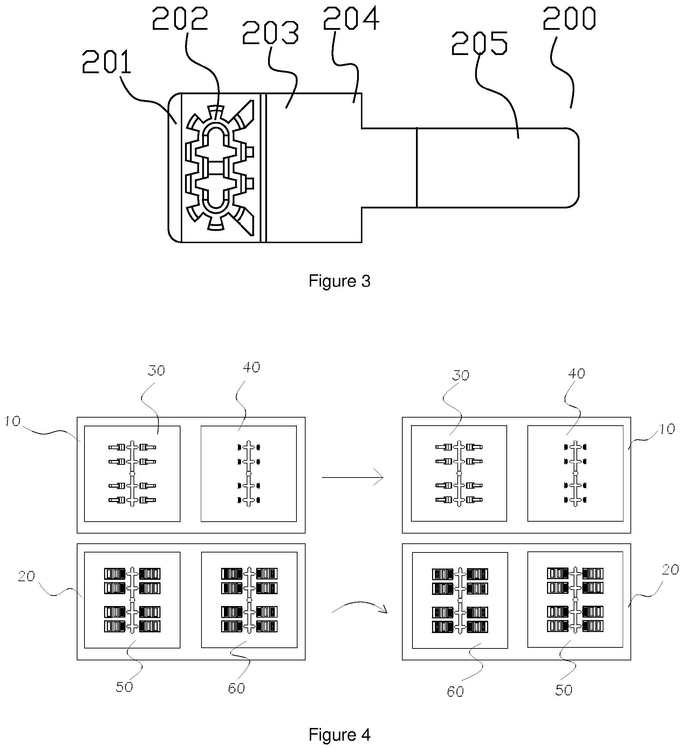

The method of manufacturing the above modular plug, referring to Figure 4, includes the following steps:
(1) Firstly, injection moulding a terminal 100 with the material of polycarbonate resin, and then injection moulding a terminal 100 of the material of polycarbonate resin having irregularly shaped recess using a mould cavity of a first rear mould 60 and a convex mould of the first front mould 40;
(2) Under the condition of guaranteeing the temperature of the injection moulding machine, opening and spirally loosening the first rear mould 60, covering the first rear mold 60 on the second front mould 30, injection moulding a clamping elastic sheet 200 with a material of nylon or POM using a mould cavity on the second front mould 30, opening and spirally loosening the first rear mould 60, and taking out the end product.

The present product is formed from the processing of different materials under twice injection moulding at high temperature. The material of the clamping elastic sheet 200 is nylon or POM, so that the clamping elastic sheet 200 can repetitiously be pressed and bent and cannot be broken easily. Therefore, the reliability of the network connection is ensured, and a recess 101 is inventively provided on the upper surface of the front end the terminal 100, and a projection 202 is inventively provided at the front end of the clamping elastic sheet 200. The projection 202 is tightly inlaid within the recess 101. The cooperation of the specific shapes of the bezel portion 201 which overlays the terminal 100 and extends downwardly from the top end of the clamping elastic sheet 200 and the recess 101 allows the clamping elastic sheet 200 to fix stably on the terminal 100.

The modular plug of the present embodiment, referring to Figure 3, and on the basis of the present technical solution, can be such that the clamping elastic sheet 200 includes a connecting head 203 fixed at the front side of the terminal and an elastic sheet 205 extending in slanted upward direction from the end of the connecting head 203. The elastic sheet 205 is provided with a clamping projection 204 protruding outward from both sides and proximate to the end of the connecting head 203.

The modular plug of the present embodiment, referring to Figure 3, can specifically be, on the basis of the present technical solution, the connecting head 203 and the elastic sheet 205 are formed from one single injection moulding.

The modular plug of the present embodiment, referring to Figure 1, can specifically be, on the basis of the present technical solution, modular plug is a connector including RJ45, RJ50, RJ61, RJ48 RJ25, RJ14, RJ12 or RJ11 etc.

The modular plug of the present embodiment, referring to Figure 2, can specifically be, on the basis of the present technical solution, such that the recess 101 has an oval gear shape. The teeth proximate to the two ends of a central part of the recess 101 form expanded dovetailed shape 102. Through the cooperation between the bezel portion 201 which overlays the terminal 100 and extends downwardly from the top end of the clamping elastic sheet 200 and the oval gear shape of the recess 101 and those dovetailed shape 102, the connection therebetween becomes more reliable.

The manufacturing method of the modular plug of the present embodiment, referring to Figure 4, can specifically be, on the basis of the present technical solution, a first rear mould 60 provided on a lower mould board 20. On the lower mould board 20 is also provided paralleledly a second rear mould 50. The first rear mould 60 and the second rear mould 50 are the same in shape, size and mould cavity. The first front mould 40 is provided on the upper mould board 10. The upper mould board 10 is also provided paralleledly a second front mould 30. Referring to Figure 4, the upper mould board 10 is provided as paralleledly fixed. The lower mould board 20 is provided in parallel and can rotate in motion at 180 degree.

The above is a description of the modular plug of the present application, for using to assist in understanding the present application. However, the embodiments contained in the present application are not limited to these ones, any changes, modifications, replacements, combinations and simplifications etc are all equivalent substituting methods, which shall all fall within the protection scope of the present application as defined in the appended claims.

## Claims

1. A modular plug, comprising a terminal (100) containing a metal contact, wherein an upper surface of a front end of the terminal is provided with a recess (101), wherein an upper side of the terminal is connected with a clamping elastic sheet (200) through injection moulding, wherein a front end of the clamping elastic sheet is provided with a first projection (202) that matches the recess in shape and size, wherein the first projection is tightly inlaid within the recess, wherein a top end of the clamping elastic sheet extends downwardly and overlays on a front surface of the terminal, wherein a material of the clamping elastic sheet is nylon or polyoxymethylene;
**characterized in that**
a material of the terminal is polycarbonate resin, wherein the recess has an oval gear shape and wherein teeth of the recess that proximate to two ends of a central part of the recess form an expanded dovetailed shape (102).

2. The modular plug according to claim 1, wherein the clamping elastic sheet comprises a connecting head (203) fixed at the front end of the terminal and an elastic sheet extended in slanted upward direction from an end of the connecting head, the elastic sheet is provided with a clamping projection (204) protruding from both sides and proximate to the end of the connecting head.

3. The modular plug according to claim 2, wherein the connecting head and the elastic sheet are formed from one single injection moulding.

4. The modular plug according to claim 1, wherein the modular plug is a RJ45, RJ50, RJ61, RJ48, RJ25, RJ14, RJ12 or RJ11 connector.

5. A method for manufacturing of a modular plug comprising a terminal (100) containing a metal contact, wherein an upper surface of a front end of the terminal is provided with a recess (101), wherein an upper side of the terminal is connected with a clamping elastic sheet (200) through injection moulding, wherein a front end of the clamping elastic sheet is provided with a first projection (204) that matches the recess in shape and size, wherein the first projection is tightly inlaid within the recess, wherein a top end of the clamping elastic sheet extends downwardly and overlays on a front surface of the terminal, wherein a material of the clamping elastic sheet is nylon or polyoxymethylene, wherein the manufacturing method comprises following steps:
(1) firstly, injection molding the terminal, and then injection molding the terminal having a irregularly shaped recess (101) using a mould cavity of a first rear mould and a convex mould of a first front mould (40); and
(2) secondly, under the condition of ensuring a temperature of an injection molding machine, opening and spirally loosening the first rear mould (60), covering a second front mould (30) by the first rear mould, injection moulding a clamping elastic sheet using a mould cavity of the second front mould, opening and spirally loosening the first rear mould, and taking out an end product;
**characterized in that**
a material of the terminal is polycarbonate resin, wherein the recess has an oval gear shape and wherein teeth of the recess that proximate to two ends of a central part of the recess form an expanded dovetailed shape (102).

6. The method according to claim 5, wherein the first rear mould is provided on a lower mould board (20), wherein the lower mould board is provided in parallel with a second rear mould, wherein the first rear mould and a second rear mould (50) are the same in shape, size and mould cavity, wherein the first front mould is provided on an upper mould board (10), wherein the upper mould board is also provided in parallel with the second front mould, wherein the upper mould board is provided as fixed in parallel, wherein the lower mould board is provided in parallel and is rotatable in motion at 180 degrees.

## Patentansprüche

1. Modularstecker, der einen Anschluss (100) umfasst, der einen Metallkontakt enthält, wobei eine obere Fläche eines vorderen Endes des Anschlusses mit einer Ausnehmung (101) versehen ist, wobei eine obere Seite des Anschlusses mittels Spritzgießen mit einem elastischen Klemmblech (200) verbunden wird, wobei ein vorderes Ende des elastischen Klemmblechs mit einem ersten Vorsprung (202) versehen ist, der in Form und Größe mit der Ausnehmung zusammenpasst, wobei der erste Vorsprung innerhalb der Ausnehmung fest eingepasst ist, wobei sich ein oberes Ende des elastischen Klemmblechs nach unten erstreckt und eine vordere Fläche des Anschlusses überlagert, wobei ein Material des elastischen Klemmblechs Nylon oder Polyoxymethylen ist;
**dadurch gekennzeichnet, dass**
ein Material des Anschlusses Polycarbonatharz ist, wobei die Ausnehmung eine ovale Zahnradform aufweist und wobei Zähne der Ausnehmung nahe der zwei Enden eines mittleren Teils der Ausnehmung eine erweiterte Schwalbenschwanzform (102) bilden.

2. Modularstecker nach Anspruch 1, wobei das elastische Klemmblech einen Anschlusskopf (203), der an dem vorderen Ende des Anschlusses befestigt ist, und ein elastisches Blech, das sich in einer nach oben geneigten Richtung von einem Ende des Verbindungskopfes erstreckt, wobei das elastische Blech mit einem Klemmvorsprung (204) versehen ist, der von beiden Seiten und in der Nähe des Endes des Verbindungskopfes hervorsteht.

3. Modularstecker nach Anspruch 2, wobei der Anschlusskopf und das elastische Blech aus einem einzigen Spritzgießteil gebildet sind.

4. Modularstecker nach Anspruch 1, wobei der Modularstecker ein RJ45, RJ50, RJ61, RJ48, RJ25, RJ14, RJ12 oder RJ11-Stecker ist.

5. Verfahren zur Herstellung eines Modularsteckers, der einen Anschluss (100) umfasst, der einen Metallkontakt enthält, wobei eine obere Fläche eines vorderen Endes des Anschlusses mit einer Ausnehmung (101) versehen ist, wobei eine obere Seite des Anschlusses mittels Spritzgießen mit einem elastischen Klemmblech (200) verbunden ist, wobei ein vorderes Ende des elastischen Klemmblechs mit einem ersten Vorsprung (204) versehen ist, der in Form und Größe mit der Ausnehmung zusammenpasst, wobei der erste Vorsprung innerhalb der Ausnehmung fest eingepasst ist, wobei sich ein oberes Ende des elastischen Klemmblechs nach unten erstreckt und eine vordere Fläche des Anschlusses überlagert, wobei ein Material des elastischen Klemmblechs Nylon oder Polyoxymethylen ist, wobei das Herstellungsverfahren folgende Schritte umfasst:
(1) erstens Spritzgießen des Anschlusses und anschließend Spritzgießen des Anschlusses, der eine unregelmäßig geformte Ausnehmung (101) aufweist, unter Verwendung von einem Formhohlraum einer ersten hinteren Form und einer konvexen Form einer ersten vorderen Form (40); und
(2) zweitens, unter der Voraussetzung, dass eine Temperatur einer Spritzgießmaschine sichergestellt ist, Öffnen und spiralförmiges Lösen der ersten hinteren Form (60), Überdecken einer zweiten vorderen Form (30) durch die erste hintere Form, Spritzgießen eines elastischen Klemmblechs unter Verwendung von einem Formhohlraum der zweiten vorderen Form, Öffnen und spiralförmiges Lösen der ersten hinteren Form und Entnehmen eines Endprodukts;
**dadurch gekennzeichnet, dass**
ein Material des Anschlusses Polycarbonatharz ist, wobei die Ausnehmung eine ovale Zahnradform aufweist und wobei Zähne der Ausnehmung nahe der zwei Enden eines mittleren Teils der Ausnehmung eine erweiterte Schwalbenschwanzform (102) bilden.

6. Verfahren nach Anspruch 5, wobei die erste hintere Form auf einer unteren Formplatte (20) bereitgestellt ist, wobei die untere Formplatte parallel zu einer zweiten hinteren Form bereitgestellt ist, wobei die erste hintere Form und eine zweite hintere Form (50) in Bezug auf Form, Größe und Formhohlraum gleich sind, wobei die erste vordere Form auf einer oberen Formplatte (10) bereitgestellt ist, wobei die obere Formplatte ebenfalls parallel zu der zweiten vorderen Form bereitgestellt ist, wobei die obere Formplatte als parallel fixiert bereitgestellt ist, wobei die untere Formplatte parallel dazu bereitgestellt ist und in einer Bewegung um 180 Grad drehbar ist.

## Revendications

1. Clé modulaire, comprenant un terminal (100) contenant un contact métallique, dans laquelle une surface supérieure d'une extrémité avant du terminal est dotée d'un creux (101), dans laquelle un côté supérieur du terminal est connecté à une feuille élastique de serrage (200) par moulage par injection, dans laquelle une extrémité avant de la feuille élastique de serrage est dotée d'une première saillie (202) qui correspond au creux en forme et en taille, dans laquelle la première saillie est étroitement incrustée à l'intérieur du creux, dans laquelle une extrémité supérieure de la feuille élastique de serrage s'étend vers le bas et recouvre une surface avant du terminal, dans laquelle un matériau de la feuille élastique de serrage est du nylon ou du polyoxyméthylène ;
**caractérisé en ce**
**qu'**un matériau du terminal est de la résine polycarbonate, dans laquelle le creux présente une forme d'engrenage ovale et dans laquelle des dents du creux qui sont proches de deux extrémités d'une partie centrale du creux ont une forme en queue d'aronde étendue (102).

2. Clé modulaire selon la revendication 1, dans laquelle la feuille élastique de serrage comprend une tête de connexion (203) fixée sur l'extrémité avant du terminal et une feuille élastique étendue dans une direction oblique vers le haut depuis une extrémité de la tête de connexion, la feuille élastique est dotée d'une saillie de serrage (204) faisant saillie des deux côtés et proche de l'extrémité de la tête de connexion.

3. Clé modulaire selon la revendication 2, dans laquelle la tête de connexion et la feuille élastique sont formées à partir d'un seul moulage par injection.

4. Clé modulaire selon la revendication 1, dans laquelle la clé modulaire est un connecteur RJ45, RJ50, RJ61, RJ48, RJ25, RJ14, RJ12 ou RJ11.

5. Procédé de fabrication d'une clé modulaire comprenant un terminal (100) contenant un contact métallique, dans lequel une surface supérieure d'une extrémité avant du terminal est dotée d'un creux (101), dans lequel un côté supérieur du terminal est connecté à une feuille élastique de serrage (200) par moulage par injection, dans lequel une extrémité avant de la feuille élastique de serrage est dotée d'une première saillie (204) qui correspond au creux en forme et en taille, dans lequel la première saillie est étroitement incrustée à l'intérieur du creux, dans laquelle une extrémité supérieure de la feuille élastique de serrage s'étend vers le bas et recouvre une surface avant du terminal, dans lequel un matériau de la feuille élastique de serrage est du nylon ou du polyoxyméthylène, dans lequel le procédé de fabrication comprend les étapes suivantes :
1) premièrement, moulage par injection du terminal, puis moulage par injection du terminal ayant un creux à forme irrégulière (101) en utilisant une cavité de moule d'un premier moule arrière et un moule convexe d'un premier moule avant (40) ; et
2) deuxièmement, à condition de garantir une température d'une machine de moulage par injection, ouverture et détachement en spirale du premier moule arrière (60), recouvrement d'un second moule avant (30) par le premier moule arrière, moulage par injection d'une feuille élastique de serrage en utilisant une cavité de moule du second moule avant, ouverture et détachement en spirale du premier moule arrière et prélèvement d'un produit fini ;
**caractérisé en ce qu'**un
matériau du terminal est de la résine de polycarbonate, dans lequel le creux présente une forme d'engrenage ovale et dans laquelle des dents du creux qui sont proches de deux extrémités d'une partie centrale du creux ont une forme en queue d'aronde étendue (102).

6. Procédé selon la revendication 5, dans lequel le premier moule arrière est prévu sur une planche à trousser basse (20), dans lequel la planche à trousser basse est dotée en parallèle d'un second moule arrière, dans lequel le premier moule arrière et un second moule arrière (50) ont la même forme, taille et cavité de moule, dans lequel le premier moule avant est prévu sur une planche à trousser haute (10), dans lequel la planche à trousser haute est également dotée en parallèle du second moule avant, dans lequel la planche à trousser haute est prévue comme étant fixée en parallèle, dans lequel la planche à trousser basse est prévue en parallèle et est rotative en mouvement à 180 degrés.
